# FASCICULE DE BREVET EUROPEEN

(11) **EP 2 526 017 B1**
(45) Date de publication et mention de la délivrance du brevet: **25.06.2014**
(21) Numéro de dépôt: 11701013.2
(22) Date de dépôt: 19.01.2011
(51) Int. Cl.: B64C 25/12

(54) **ATTERRISSEUR D'AERONEF DU TYPE A BALANCIER ET PARALLELOGRAMME DEFORMABLE**
FLUGZEUGLANDEGESTELL VOM TYP SCHWINGENARM UND DEFORMIERBARES PARALLELOGRAMM
AIRCRAFT LANDING GEAR OF THE ROCKER-ARM AND DEFORMABLE-PARALLELOGRAM TYPE

(30) Priorité: 19.01.2010 FR 1050325
(43) Date de publication de la demande: 28.11.2012
(73) Titulaire: Messier-Bugatti-Dowty, 78140 Velizy Villacoublay (FR)
(72) Inventeur: DUCOS, Dominique, F-91600 Savigny Sur Orge (FR); LOCUFIER, Jean-François, F-78120 Rambouillet (FR)
(74) Mandataire: Parzy, Benjamin Alain
(86) Numéro de dépôt international: PCT/EP2011/000198
(87) Numéro de publication internationale: WO 2011/088991

(56) Documents cités:
- FR-A- 1 212 484
- GB-A- 1 141 142
- US-A- 4 412 665

## Description

L'invention est relative à un atterrisseur d'aéronef du type à balancier et parallélogramme déformable.

### ARRIERE-PLAN TECHNOLOGIQUE DE L'INVENTION

De nombreux aéronefs amphibies sont également dotés d'atterrisseurs à parallélogramme déformable. Parallélogramme déformable est le terme consacré pour une structure déformable à quatre articulations parallèles, même si, en pratique, les côtés de la structure ne sont bien souvent pas de longueurs deux à deux identiques.

On citera par exemple des avions tels que le Grumman Widgeon ou le Grumman Goose. Celui-ci comporte deux panneaux montés articulés sur la structure de l'aéronef selon des premiers axes parallèles, un caisson étant monté articulé sur chacun des panneaux selon des deuxièmes axes parallèles aux premiers axes. Le caisson porte une roue à son extrémité basse. L'ensemble peut se rétracter alors à la manière d'un parallélogramme déformable, la roue restant parallèle à elle-même lors de la rétraction.

L'avion de transport militaire Boeing C17 est également équipé d'atterrisseurs principaux du type à parallélogramme déformable. US 4412665 montre un atterrisseur de ce type avec toutes les caractéristiques techniques du préambule de la revendication 1. Dans ces atterrisseurs, le caisson reçoit un pivot d'axe de pivotement sensiblement vertical, le pivot recevant en sa partie basse un balancier portant les roues, et en sa partie haute l'amortisseur relié au balancier. Un embiellage permet de faire tourner le pivot, et donc le balancier, l'amortisseur et les roues, lors de la rétraction ou de l'extension de l'atterrisseur.

### OBJET DE L'INVENTION

L'invention a pour objet un atterrisseur du type à parallélogramme déformable, très simple.

### BREVE DESCRIPTION DE L'INVENTION

L'invention est relative à un atterrisseur d'aéronef de type à parallélogramme déformable, comportant :
- une jambe comportant un caisson avec une extrémité basse sur laquelle un balancier portant au moins une roue est articulé, un amortisseur étant attelé entre le balancier et le caisson ;
- deux panneaux chacun articulés d'une part sur la structure de l'aéronef et d'autre part sur la jambe, selon des axes parallèles ;
le tout formant une structure articulée déformable. Selon l'invention, l'un des panneaux est articulé sur la jambe en étant brochée à une extrémité d'un pivot du balancier sur le caisson.

Ainsi, l'articulation dudit panneau et du caisson ne nécessite aucune forme complexe sur le caisson, et notamment aucune chape s'étendant latéralement en porte-à-faux du caisson, ce qui simplifie la conception du caisson.

### BREVE DESCRIPTION DES FIGURES

L'invention sera mieux comprise à la lumière de la description qui suit d'un mode de réalisation particulier non limitatif de l'invention, en référence aux figures ci-jointes parmi lesquelles :
- les figures 1 à 4 sont des vues en perspective de face, en perspective de derrière, de côté et de face d'un atterrisseur selon l'invention en position déployée ;
- les figures 5 à 8 sont des vues en perspective de face, en perspective de derrière, de côté et de face du même atterrisseur en position rétractée ;
- la figure 9 est une vue de détail de la liaison entre le panneau inférieur et le pivot du balancier de l'atterrisseur des figures 1 à 8.

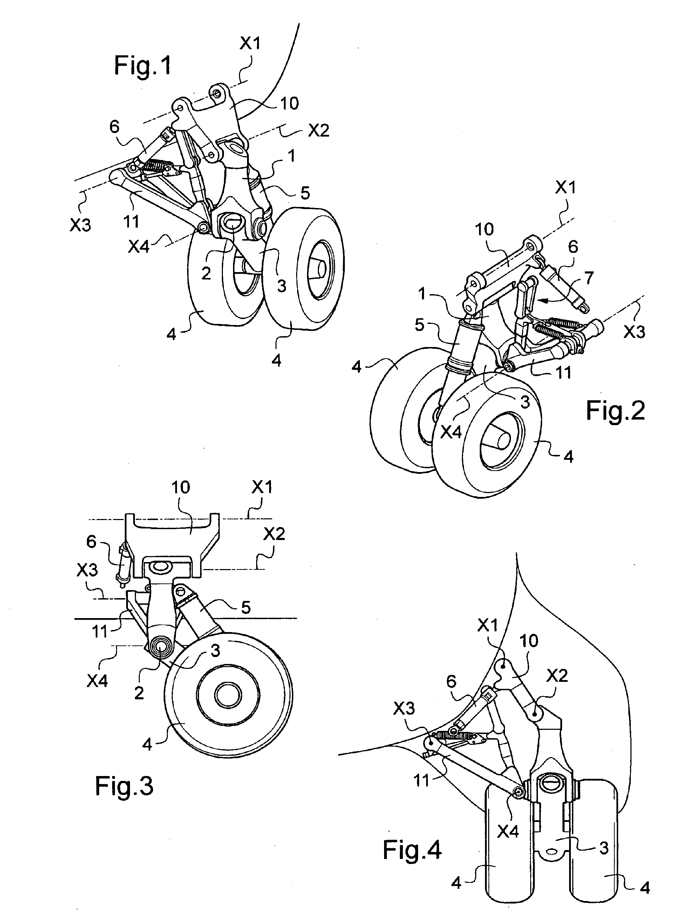

En référence aux figures 1 à 4, l'atterrisseur de l'invention comporte une jambe comprenant un caisson 1 dont l'extrémité basse forme une fourche avec deux ailes en forme de chape pour recevoir un pivot 2 sur lequel un balancier 3 portant des roues 4 est articulé. Un amortisseur 5 est attelé entre le caisson 1 et le balancier 3.

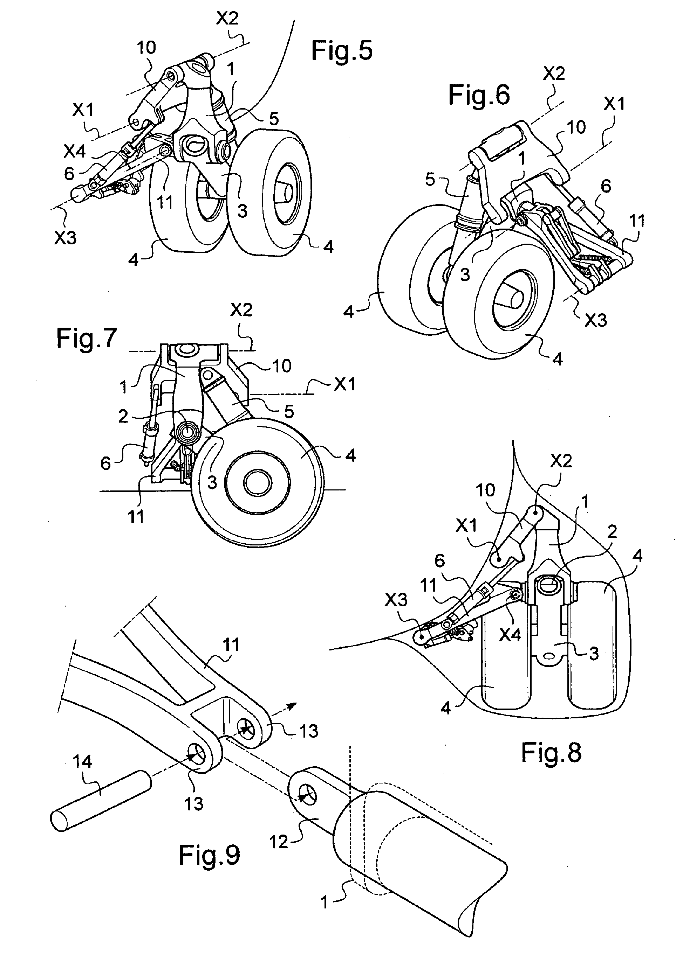

La jambe est reliée au fuselage de l'aéronef au moyen d'une structure articulée et déformable pour permettre le mouvement de l'atterrisseur entre la position déployée des figures 1 à 4 et la position rétractée des figures 5 à 8. Cette structure articulée comprend :
- un panneau supérieur 10 qui est articulé d'une part sur la structure de l'aéronef selon un axe X1, et d'autre part sur la partie haute de la jambe selon un axe X2 parallèle à l'axe X1 ;
- un panneau inférieur 11 qui est articulé d'une part sur la structure de l'aéronef selon un axe X3 parallèles aux axes X1 et X2, et d'autre part sur la partie basse de la jambe selon un axe X4 parallèle à l'axe X1.

L'ensemble formé de la jambe et des deux panneaux forme une structure du type à parallélogramme déformable pouvant être déformée à volonté entre la position déployée de la figure 1 et la position rétractée de la figure 4. A cet effet, un organe de manoeuvre 6 (ici un vérin hydraulique) est attelé entre le panneau supérieur 10 et le panneau inférieur 11 pour provoquer les déformations de l'atterrisseur (ici, la liaison entre l'organe de manoeuvre 6 et le panneau inférieur 11 n'a pas été représentée, pour plus de clarté, mais il est bien évident que l'organe de manoeuvre 6 est articulé sur le panneau inférieur).

Un organe de contreventement, ici une contrefiche briseuse 7 également attelée entre les deux panneaux, permet de stabiliser l'atterrisseur dans la position déployée. Un organe de verrouillage 8 attelé entre le panneau inférieur 11 et la contrefiche 7 verrouille la contrefiche en position alignée lorsque l'atterrisseur est en position déployée. On remarquera que les seuls interfaces mécaniques de l'atterrisseur avec la structure de l'aéronef sont les articulations des panneaux 10,11 selon les axes X1 et X3.

En variante, l'organe de manoeuvre et/ou l'organe de contreventement pourront être attelés entre l'un des panneaux et la structure de l'aéronef si la configuration de l'atterrisseur ne ménage pas assez de place pour loger l'organe de manoeuvre et/ou l'organe de contreventement entre les panneaux comme ici. Cependant, cette disposition crée de nouvelles interfaces avec la structure de l'aéronef.

Ici, le panneau supérieur 10 est directement articulé sur le caisson. En revanche, et selon l'invention, le panneau inférieur 11 n'est pas articulé sur le caisson 1 lui-même, mais sur une extrémité 12 du pivot 2 qui saille latéralement du caisson 1, plus particulièrement visible à la figure 9. Cette extrémité est ici conformée en forme de chape qui vient s'insérer entre les deux ailes 13 de l'extrémité du panneau inférieur 11, une broche 14 s'étendant dans les ailes et la chape pour définir l'articulation du panneau inférieur et de la jambe.

Cette disposition permet d'éviter d'usiner sur le caisson une ou des ailes formant chape pour recevoir la broche d'articulation du panneau inférieur. Qui plus est, la liaison ainsi formée fait fonction d'anti-rotation du pivot 2 par rapport au caisson 1.

L'invention n'est pas limitée à ce qui vient d'être décrit, mais englobe au contraire toute variante entrant dans le cadre défini par les revendications.

En particulier, on pourra interposer une rotule entre la broche et la chape de l'extrémité du pivot. On pourra également conformer l'extrémité du pivot pour présenter deux ailes, le panneau inférieur comportant alors une chape terminale venant s'insérer entre les deux ailes, bien qu'à priori cette disposition soit moins avantageuse.

## Revendications

1. Atterrisseur d'aéronef de type à parallélogramme déformable, comportant :
- une jambe comportant un caisson (1) avec une extrémité basse sur laquelle un balancier (3) portant au moins une roue est articulé au moyen d'un pivot (2), un amortisseur (5) étant attelé entre le balancier et le caisson ;
- deux panneaux (10,11) chacun articulés d'une part sur la structure de l'aéronef et d'autre part sur la jambe, selon des axes parallèles ;
**caractérisé en ce que** l'un des panneaux (11) est articulé sur la jambe en étant broché à une extrémité du pivot (2) du balancier sur le caisson.

2. Atterrisseur d'aéronef selon la revendication 1, comportant un organe de contreventement qui est attelé aux deux panneaux.

3. Atterrisseur d'aéronef selon la revendication 1, comportant un organe de manoeuvre (6) qui est attelé aux deux panneaux.

## Patentansprüche

1. Flugzeugfahrwerk vom Typ mit verformbarem Parallelogramm, umfassend:
- ein Bein, umfassend einen Kasten (1) mit einem unteren Ende, an dem ein Schwenkträger (3), der mindestens ein Rad trägt, mittels eines Zapfens (2) angelenkt ist, wobei ein Stoßdämpfer (5) zwischen dem Schwenkträger und dem Kasten gekoppelt ist,
zwei Platten (10, 11), die jeweils einerseits an der Struktur des Flugzeugs und andererseits an dem Bein angelenkt sind, gemäß parallelen Achsen, **dadurch gekennzeichnet, dass** eine der Platten (11) an dem Bein angelenkt ist, indem sie an einem Ende des Zapfens (2) des Schwenkträgers an dem Kasten broschiert ist.

2. Flugzeugfahrwerk nach Anspruch 1, umfassend ein Versteifungsorgan, das an die beiden Platten gekoppelt ist.

3. Flugzeugfahrwerk nach Anspruch 1, umfassend ein Stellorgan (6), das an die beiden Platten gekoppelt ist.

## Claims

1. Aircraft landing gear of deformable-parallelogram type, including:
- a leg including a casing (1) having a lower end on which a rocker arm (3) carrying at least one wheel is hinged by means of a pivot (2), a shock absorber (5) being connected between the rocker arm and the casing;
- two panels (10, 11) each hinged on the one hand on the structure of the aircraft and on the other hand on the leg, about parallel axes;
**characterized in that** one of the panels (11) is hinged on the leg whilst being connected to the casing by a pin on one end of the pivot (2) of the rocker arm.

2. The aircraft landing gear as claimed in claim 1, including a bracing member that is connected to the two panels.

3. The aircraft landing gear as claimed in claim 1, including a maneuvering member (6) that is connected to the two panels
